Europäisches Patentamt

European Patent Office

Office européen des brevets

(19)

(11) Veröffentlichungsnummer: **0 257 536**
**A2**

(12) **EUROPÄISCHE PATENTANMELDUNG**

(21) Anmeldenummer: **87112008.5**

(22) Anmeldetag: **19.08.87**

(51) Int. Cl.⁴: **C08B 11/20**

(30) Priorität: **25.08.86 DE 3628826**

(43) Veröffentlichungstag der Anmeldung:
**02.03.88 Patentblatt 88/09**

(84) Benannte Vertragsstaaten:
**DE GB SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Rähse, Wilfried, Dr.**
**Kolhagenstrasse 44**
**D-4000 Düsseldorf 13(DE)**
Erfinder: **Wüst, Willi, Dr.**
**Fasanenring 32**
**D-4030 Ratingen(DE)**
Erfinder: **Just, Günther**
**Verdistrasse 48**
**D-4010 Hilden(DE)**

(54) **Verfahren zur Aufarbeitung von wasserlöslichen Cellulosederivaten mit hohen Flockungspunkten.**

(57) Die Erfindung betrifft eine Verfahren zur Aufarbeitung von wasserlöslichen Cellulosederivaten, insbesondere mit Flockungspunkten oberhalb von 85°C, nach Abkondensieren leicht flüchtiger Bestandteile der aus der Veretherungsreaktion resultierenden Rohproduktmischung durch Aufschlämmen des Rohprodukts in heißem Wasser und anschließendes Abtrennen der Aufschlämm-und der Waschflüssigkeiten, dadurch gekennzeichnet, daß das Abtrennen der Aufschlämm-und der Waschflüssigkeiten unter Anlegen von Druck an die gesamte Abtrennvorrichtung bei erhöhten Temperaturen durchgeführt wird.

EP 0 257 536 A2

# Verfahren zur Aufarbeitung von wasserlöslichen Cellulosederivaten mit hohen Flockungspunkten

Die Erfindung betrifft ein neues Verfahren zur Aufarbeitung von wasserlöslichen Cellulosederivaten mit hohen Flockungspunkten. Es ermöglicht ferner eine wirtschaftliche Aufarbeitung aller Celluloseether.

Methylcellulose selbst sowie und ihre Derivate, beispielsweise Methylhydroxyalkylcellulosen, finden heute Anwendung in einer Vielzahl von technischen Gebieten. Ihrer Herstellung im großindustriellen Maßstab aus preiswert erhältlichen Rohstoffen wird deswegen in jüngster Zeit verstärkte Beachtung geschenkt. Insbesondere gewinnen Verfahren an wichtigkeit, mit denen Methylcellulose und ihre Derivate in hohen Ausbeuten und unter ökonomisch vertretbaren Reaktionsbedingungen hergestellt werden konnen. Im Rahmen derartiger Produktionsverfahren, die im wesentlichen aus den Verfahrensschritten

(a) Zerteilen des Cellulose-Ausgangsmaterials (Baumwoll-Linters, Zellstoffe aus Hölzern unterschiedlicher Provenienz usw.),

(b) Quellen unter Aufweitung des Cellulose-Gittergefüges mit Alkalien, meist NaOH,

(c) Veretherung (meist mit Alkylhalogeniden sowie mit Alkylenoxiden),

(d) Aufarbeitung, d.h. Reinigung des Rohprodukts von unerwünschten Nebenprodukten und

(e) Konditionierung bestehen, gewinnt die Stufe der Aufarbeitung der Rohprodukte (Stufe (d)) immer größere Bedeutung. In dieser Verfahrensstufe wird der im Zuge der Veretherungsreaktion hergestellte Celluloseether bzw. Cellulosemischether nach Austrag aus dem Reaktor von den Nebenprodukten (Methanol, Dimethylether, (Poly-)alkylenglykole, NaCl, u.a.) befreit. Das mit heißem Wasser von Kochsalz sowie von den Glykolen gereinigte Produkt wird den nachfolgenden Konditionierungs-bzw. Aufarbeitungsschritten (Trocknung, Zerkleinerung, Siebung usw.) zugeführt.

Zur Abtrennung des in stöchiometrischen Mengen zur Alkalilauge entstehenden Nebenproduktes NaCl wurde bisher üblicherweise der Celluloseether in heißem Wasser aufgeschlämmt, wobei sich das Kochsalz umgehend löste. Die Trennung der wäßrigen salzhaltigen Phase vom Celluloseether erfolgt nach dem Stand der Technik in Zentrifugen bei Temperaturen zwischen 70°C und 90°C.

Um in dieser Verfahrensstufe Verluste an Cellulosemischether-Reinprodukt zu vermeiden, muß die Aufschlämmung des Rohproduktes in heißem Wasser bzw. die anschließende Trennung durch Zentrifugation deutlich oberhalb des Flockungspunktes des jeweiligen Cellulosemischethers durchgeführt werden, d.h. deutlich oberhalb der Temperatur, bei der der jeweilige Celluloseether aus seinen Lösungen ausflockt. Bei Arbeiten unterhalb des Flockungspunktes geht zumindest ein Teil des Rohproduktes in Lösung und damit der Isolierung in Festform verloren.

Die Flockung, charakterisiert durch den Flockungspunkt, erfolgt über einen breiteren Temperaturbereich. Dieser Bereich ist abhängig vom eingesetzten Rohstoff, von der Einheitlichkeit der Substituierung, dem Veretherungsgrad sowie von der Produktviskqsität.

Wenn auch die Forderung, oberhalb des Flockungsproduktes aufzuschlämmen bzw. zu zentrifugieren, für Methylcellulose selbst leicht zu erfüllen ist, da der Flockungspunkt - je nach durchschnittlichem Substitutionsgrad - im Bereich zwischen 35 und 65°C liegt, so ergaben sich für die in zunehmenden Mengen in der Technik erwünschten Hydroxyalkylderivate der Methylcellulose Probleme insofern, als deren Flockungspunkte - schon bei geringen Prozentgehalten an Hydroxyalkylgruppen im Polymermolekül - deutlich steigen. Gleiches gilt für die Einführung von Carboxymethylgruppen in die Methylcellulose.

Die Aufarbeitung von Methylcellulose-Derivaten nach dem oben beschriebenen und bisher allgemein angewendeten Verfahren wurde in dem Maße schwieriger, in dem der Flockungspunkt durch Steigerung des Hydroxyalkylierungsgrads bei einer gegebenenfalls geringeren Methoxylierung mehr und mehr anstieg. Bei Methylcellulose-Derivaten mit Flockungspunkten oberhalb von 85°C, meist bereits oberhalb von 75°C, ließen sich deutliche Produktverluste nicht vermeiden, da die Temperatur in der Aufschlämmung sowie der Abtrennungsstufe in die Nähe oder teils unterhalb des Flockungspunktes geriet. Eine Verstärkung der Abkühlung erfolgt durch die Luftventilation beim Zentrifugationsvorgang, so daß gereinigtes Methylcellulosederivat teilweise in Lösung ging. Maßnahmen zur Änderung dieser Situation bzw. zur Umgehung dieses Problems wurden bisher nicht vorgeschlagen.

Die Erfindung stellte sich somit die Aufgabe, ein Verfahren zur Aufarbeitung von Methylcellulose-Derivaten zur Verfügung zu stellen, das es gestattet, auch Produkte mit Flockungspunkten oberhalb von 75°C, insbesondere oberhalb von 85°C ohne wesentliche Produktverluste, d.h. mit hoher Ausbeute, aufzuarbeiten. Dieses Verfahren sollte im industriellen Maßstab anwendbar sein und sich dabei an sich bekannten Maschinen und Apparate bedienen. Ferner was es ein Ziel, diesen kritischen Aufarbeitungsschritt mit möglichst hohem Wirkungsgrad durchzuführen, d.h. die Aufarbeitung sollte möglichst in einem Apparat vor sich gehen.

Die Erfindung bezieht sich sowohl auf wasserlösliche Cellulosederivate mit Methoxylgruppen als auch auf solche mit Hydroxyalkylgruppen (Hydroxyethyl), Hydroxypropyl) oder Carboxymethylgruppen. Wesentlich ist nur, daß die Cellulosederivate einen Flockungspunkt aufweisen.

Die Erfindung betrifft ein Verfahren zur Aufarbeitung von wasserlöslichen Cellulosederivaten, insbesondere mit Flockungspunkten oberhalb von 85°C, nach Abkondensieren leicht flüchtiger Bestandteile der aus der Veretherungsreaktion resultierenden Rohproduktmischung durch Aufschlämmen des Rohprodukts in heißem Wasser und anschließendes Abtrennen der Waschflüssigkeit, dadurch gekennzeichnet, daß alle Schritte, Anmaischen, Produktaustrag, Bereitstellung der Suspension, Abtrennen der Mutterlauge und der Waschflüssigkeiten unter Anlegen eines Drucks oberhalb von wenigstens 1 bar durchgeführt werden.

Das aus der Veretherungsreaktion resultierende Produktgemisch wird zur Vorbereitung der erfindungsge mäßen Verfahren nach an sich bekannten Methoden von den - in der Regel leicht flüchtigen - organischen Nebenprodukten der Veretherungsreaktion sowie dem Überschuß an Veretherungsmittel befreit. Dies geschiet üblicherweise durch Abkondensieren der organischen Verbindungen, insbesondere Methylchlorid, Dimethylether und Methanol. Danach liegt ein Rohprodukt vor, das im wesentlichen nur noch schwer flüchtige Bestandteile enthält. Es handelt sich dabei überwiegend um den gewünschten Cellulosemischether, Natriumchlorid, überschüssiges Alkali aus der Verfahrensstufe (b) (Quellen des Rohmaterials mit Alkali) sowie Wasser und den Glykolen bzw. Glykolaten.

Dieses Rohprodukt wird im Zuge des erfindungsgemäßen Verfahrens zur Aufarbeitung von Methylcellulose-Derivaten in heißem Wasser einer Temperatur im Bereich von 100 bis 120°C aufgeschlämmt. Die Rohprodukt-Wasser-Mischung, die man üblicherweise auch als "Maische" bezeichnet, wird aus dem Reaktor ausgetragen und in einer Druckvorlage zwischengespeichert. Das Produkt kann in dieser Form oder nach Neutralisation der Restalkalimenge gereinigt werden.

Aus dieser Druckvorlage wird die Maische einer Abtrennvorrichtung zugeführt, an die insgesamt ein Gegendruck angelegt wurde.

Als Abtrennvorrichtungen kommen in dem erfindungsgemäßen Verfahren an sich übliche Maschinen und Apparate zum Einsatz. Solche Apparate können beispielsweise abgeschlossene Zentrifugen, Dekanter, Druckfilter oder ähnliche Fest-Flüssig-Trenneinrichtungen sein. In dem erfindungsgemäßen Verfahren zur Aufarbeitung von Methylcellulose-Derivaten kommen bevorzugt Druckfilter zum Einsatz. Diese Druckfilter sind so beschaffen, daß sich sowohl Zu-als auch Abläufe unter Druck betreiben lassen, d.h. auf der Maische-und auf der Filtrat-Seite herrscht ein Druck oberhalb des Atmosphärendrucks. Außer den genannten Apparaten ist es jedoch auch möglich, andere, dem Fachmann für derartige Zwecke bekannte Apparate zu verwenden.

In einer bevorzugten Ausführungsform wird das Verfahren zur Aufarbeitung von Methylcellulose-Derivaten unter Anlegen eines Drucks im Bereich von 1,1 bis 7 bar an die gesamte Abtrennvorrichtung, bevorzugt unter Anlegen eines Druckes im Bereich von 1,5 bis 3 bar, durchgeführt. Somit herrscht in der gesamten Abtrennvorrichtung, beispielsweise in dem zum Abtrennen der Waschflüssigkeit verwendeten Druckfilter, sowohl auf der Maische-Seite als auch auf der Filtrat-Seite ein Überdruck im Bereich von 0,1 bis 6 bar bzw. - in der besonders bevorzugten Ausführungsform - ein Überdruck im Bereich von 0,5 bis etwa 2 bar. Diese Verfahrenweise ist deswegen als besonders vorteilhaft anzusehen, weil ein Absinken der Temperatur der Waschflüssigkeit unter 100°C dadurch sicher vermieden wird und weil ein Verdampfen des Wachwassers bzw. der Mutterlauge wegen des an die gesamte Abtrennvorrichtung vorhandenen Drucks verhindert werden kann. Dadurch ist es möglich, alle Wasch-und Filtrationsschritte oberhalb des Flockungspunktes der zu reinigenden Methylcellulosederivate durchzuführen und Produktverluste durch ein Lösen des zu reinigenden Celluloseethers zu vermeiden.

Es ist weiterhin erfindungsgemäß bevorzugt, beim Abtrennen der Anmaisch-und Waschflüssigkeit, das unter Anlegen von Druck an die gesamte Abtrennvorrichtung durchgeführt wird, eine Temperatur der Waschflüssigkeit einzustellen, die mindestens 10°C oberhalb des Flockungspunktes des zu reinigenden Methylcellulose-Derivats liegt. Bevorzugterweise wird die Temperatur der Waschflüssigkeit auf einen Bereich von 100 bis 160°C, insbesonders auf einen Bereich von 105 bis 120°C, eingestellt. Damit wird erfindungsgemäß erreicht, daß die Löslichkeit des jeweiligen Methylcellulosederivates in dem wäßrigen Medium so gering ist, daß Produktverluste weitgehend vermieden werden.

Das erfindungsgemäße neue Verfahren zur Aufarbeitung von wasserlöslichen Cellulosederivaten kann sowohl kontinuierlich als auch diskontinuierlich durchgeführt werden. Bei einer diskontinuierlichen Verfahrensweise ist es - wie auch im Stand der Technik-möglich, zur Einstellung einer besonders hohen Reinheit des Produktes die Verfahrensschritte des Aufschlämmens in heißem Wasser mit anschließendem Abtrennen der Waschflüssigkeit gegebenenfalls zu wiederholen, wobei im Unterschied zum Stand der Technik im erfindungsgemäßen Verfahren die gesamte Vorrichtung zum Abtrennen der Waschflüssigkeit unter Druck gesetzt wird.

Zur Reduzierung des Waschwasserbedarfs ist es möglich, die Aufarbeitung im Gegenstrom durchzuführen, wobei man das abgetrennte Waschwasser aus der letzten Waschstufe wieder in die vorletzte Waschstufe einsetzt usw., bzw. zum Anmaischen der nächsten Charge nutzt. So kann beispielsweise das durch Filtration abgetrennte Waschwasser des zweiten Abtrennschrittes zum Anmaischen des unmittelbar aus der Veretherung stammenden Rohproduktes verwendet werden.

In der bevorzugten Ausführungform erfolgen die Abtrennung von Anmaischwasser und Waschflüssigkeit in einem Apparat. Auch hierbei ist durch Teilen der Waschflüssigkeitsmenge eine Gegenstromfahrweise möglich.

In einer weiteren Ausführungsform des erfindungsgemäßen Verfahrens zur Aufarbeitung von wasserlöslichen Cellulosederivaten mit hohem Flockungspunkt ist es zusätzlich möglich, die Restfeuchte des filtrierten Produkts auf dem Filter unter Durchleiten von trockenem Heißdampf unter Druck nachhaltig zu reduzieren. Dazu wird der nach Abpressen der Waschflüssigkeit gereinigte Filterkuchen unter Druck mit trockenem Heißdampf beaufschlagt. Derartiger Heißdampf steht beispeilsweise unter erhöhtem Druck von etwa 4 bar bei einer Temperatur von 130°C. Dieser treibt dann die Feuchtigkeit ("Zickelwasser") aus dem Filterkuchen aus, so daß man ein Produkt enthält, das nur noch eine geringe Restfeuchte aufweist. Diese liegt danach beispielsweise im Bereich von 25 bis 40 %. Auch mittels Durchblasen von Stickstoff oder Luft kann man bei erhöhter Temperatur die Restfeuchte verringern.

Das erfindungsgemäße Verfahren weist ferner den Vorteil auf, daß nur geringe Mengen an Waschwasser eingesetzt werden müssen. Daher bietet es sich auch als Aufarbeitungsverfahren für alle Cellulosederivate an, biespielsweise für Methylcellulose-und Hydroxypropylcellulose-Derivate mit niedrigeren Flockungspunkten sowie auch für die Lösungsmittelwäsche bei Reinigung von Carboxymethyl-und Hydroxyethylcellulosen.

## Beispiel

Durch Umsetzung von alkalisierter Cellulose mit Methylchlorid in Gegenwart von Ethylenoxid wurde eine Methylhydroxyethylcellulose (MHEC) mit folgenden charakteristischen Kenngrößen des Fertigproduktes hergestellt:
- Brookfield-Viskosität bei 2%iger Anrührung (Meßtemperatur: 20°C): 12 000 mPas;
- Gehalt $OCH_3$: 22,1 %;
- Gehalt EOOH: 8,9 % und
- Flockungspunkt: 91°C.

Das Rohprodukt wies nach der Umsetzung eine Restfeuchte von 29,8 % und einen Kochsalzgehalt von 27,4 % auf. Für die Waschversuche wurde dieses Rohprodukt eingesetzt.

Nach der Entnahme aus dem Reaktor wurde das Rohprodukt mit der elffachen Gewichtsmenge Wasser, bezogen auf das trockene Rohprodukt, in einen Druckbehälter überführt und auf eine Temperatur von 120°C (bei ca. 3 bar) erwärmt. Die heiße Suspension wurde unter Überdruck auf ein kontinuierlich arbeitendes Druckfilter gepumpt. Dort erfolgte zunächst die Abtrennung der Mutterlauge bei einem Druck von 1,7 bar (Überdruck von 0,7 bar).

Nach Entfernen des "Zwickelwassers" durch trockenen Heißdampf einer Temperatur von 120°C bei ca. 3 bar erfolgte eine weitere Wäsche des Produktes mit Druckwasser einer Temperatur von 120°C bei ca. 3 bar. Die Waschwassermenge betrug hierbei das sechsfache an Gewicht der trockenen Methylhydroxyethylcellulose.

Nach der Wäsche wurde das nach dem Filtrationsschritt noch vorhandene Zwickelwasser mit trockenem Heißdampf bei ca. 3 bar Druck und einer Temperatur von 120°C entfernt. Anschließend ist das Produkt mittels eines Schabers vom Filter entfernt worden.

Das Versuchsfilter hatte eine Größe von ca. 0,1 $m^2$; seine spezifische Filterleistung betrug ca. 250 kg MHEC atro/$m^2$/h. Die Restfeuchte des auf diesem Wege erhaltenen Produktes betrug 36 %; der kochsalzgehalt des Reinproduktes lag unter 0,5 %.

Ein Methylcellulosederivat mit einem Flockungspunkt von 91°C - wie vorstehend beschrieben gereinigt - kann mit den bisher bekannten Verfahren zur Reinigung von Methylcellulosederivaten nicht aufgearbeitet werden.

## Ansprüche

1. Verfahren zur Aufarbeitung von wasserlöslichen Cellulosederivaten, insbesondere mit Flockungspunkten oberhalb von 85°C, nach Abkondensieren leicht flüchtiger Bestandteile der aus der Veretherungsreaktion resultierenden Rohproduktmischung durch Aufschlämmen des Rohprodukts in heißem Wasser und anschließendes Abtrennen der Aufschlämm-und der Waschflüssigkeiten, dadurch gekennzeichnet, daß man das Aufschlämmen, gegebenenfalls Zwischenlagern sowie Abtrennen der Aufschlämm-und Waschflüssigkeiten in solchen Vorrichtungen durchführt, die insgesamt unter einem Druck oberhalb 1 bar betrieben werden.

2. Verfahren nach Anspruch 1, dadurch gekannzeichnet, daß man das Abtrennen der Waschflüssigkeit unter Anlegen eines Drucks im Bereich von 1,1 bis 7 bar an die gesamte Abtrennvorrichtung durchführt.

3. Verfahren nach Anspruch 2, dadurch gekennzeichnet, daß man an die gesamte Abtrennvorrichtung einen Druck im Bereich von 1,5 bis 3 bar anlegt.

4. Verfahren nach Ansprüchen 1 bis 3, dadurch gekennzeichnet, daß man das Abtrennen der Waschflüssigkeit bei einer Temperatur der Waschflüssigkeit von mindestens 10°C oberhalb des Flockungspunktes des zu reinigenden Methylcellulose-Derivats durchführt.

5. Verfahren nach Anspruch 4, dadurch gekennzeichnet, daß man das Abtrennen der Waschflüssigkeit bei einer Temperatur von 100 bis 160°C, bevorzugt von 105 bis 120°C, durchführt.

6. Verfahren nach Ansprüchen 1 bis 5, dadurch gekennzeichnet, daß man das Abtrennen der Aufschlämm-und der Waschflüssigkeiten in einem maische-und filtrat-seitig unter Druck stehenden Druckfilter durchführt.

7. Verfahren nach Ansprüchen 1 bis 6, dadurch gekennzeichnet, daß man zusätzlich die Restfeuchte des filtrierten Produkts auf dem Filter unter Durchleiten von trockenem Heißdampf, Preßluft oder Stickstoff unter Druck entfernt.